# DEMANDE DE BREVET EUROPEEN

(11) **EP 1 184 578 A2**
(43) Date de publication de la demande: **06.03.2002**
(21) Numéro de dépôt: 01202992.2
(22) Date de dépôt: 08.08.2001
(51) Int. Cl.: F16B 7/14

(54) **Collier de serrage à montage et démontage rapides**

(30) Priorité: 31.08.2000 LU 90632
(71) Demandeur: A.Z. INTERNATIONAL S.A., 2130 Luxembourg (LU)
(72) Inventeur:
(74) Mandataire: Waxweiler, Jean

(57) **Abrégé**

La présente invention concerne un collier de serrage qui peut être facilement appliqué sur un élément tubulaire d'une structure. Le collier peut être pourvu d'appendices (5) destinés à une utilisation finale appropriée ou bien encore destinés à l'application d'un élément ultérieur à la fois, avec des applications spécifiques propres. Le collier de serrage se compose de deux demi-coquilles (1,2) articulées le long de deux bords continus et maintenues accrochées en regard de deux bords opposés pourvus de saillies externes (6) de forme appropriée. Le dispositif de fermeture (3,4) est réalisé suivant le principe d'un levier (4) qui déplace un crochet (3) et dont le mécanisme comprend une bielle et une manivelle.

## Description

La présente invention concerne un collier de serrage à montage et démontage rapides sur des profilés tubulaires, destiné en particulier à équiper des chariots de nettoyage.

Dans le domaine des ustensiles de nettoyage les chariots de nettoyage sont très utilisés pour déplacer les ustensiles de nettoyage, les accessoires et les matériaux consommés. Ces chariots sont de différents types et ils sont constitués de matériaux divers. Les chariots les plus fiables et les plus solides sont constitués d'un ou plusieurs profilés tubulaires façonnés et/ou soudés entre eux. Sur ces chariots les instruments de nettoyage, les accessoires et les matières consommées sont disposés au-dessus, accrochés ou encore soutenus de diverses manières.

Pour ne pas entamer l'intégrité des profilés tubulaires et de leurs revêtements protecteurs superficiels (en étant vernis ou chromés), par des trous, des creux et des façonnages ou des soudures, qui pourraient affaiblir la structure et/ou, dans le temps, compromettre la couche de protection superficielle, on utilise des colliers de serrage qui, en étant fixés aux profilés tubulaires, permettent d'avoir un point d'appui et/ou de soutien en laissant intègre le profilé tubulaire sans entamer sa protection superficielle.

Ces colliers de serrage existent sous de nombreuses versions, à partir des plus simples, composés de deux demi-coquilles qui présentent, sur chaque semi-coquille individuelle, symétriquement l'une par rapport à l'autre, des sièges pour l'application de vis, jusqu'aux versions à montage irréversible, à celles à encliquetage, qui, une fois surmontée une résistance initiale, se bloquent sur le profilé.

L'un des principaux inconvénients de ces colliers de serrage est la commodité réduite d'utilisation et/ou d'application et/ou de déplacement et/ou d'enlèvement une fois les colliers installés. Les raisons de cette commodité réduite sont principalement la nécessité d'utiliser un outil, tel qu'un tournevis ou une clé, pour que les colliers puissent être fixés, enlevés ou seulement déplacés.

Un autre inconvénient est que souvent les colliers se composent de plusieurs pièces qui doivent être séparées avant l'installation du collier ou aussi pendant son déplacement.

Un autre inconvénient que l'on rencontre pendant le déplacement des colliers de serrage est qu'ils nécessitent l'emploi des deux mains d'un utilisateur éventuel. Un autre inconvénient est que généralement les colliers de serrage présentent un côté d'application et que pour cette raison ils ne peuvent pas être appliqués à des profilés sur le côté opposé. En outre, ils n'ont pas la possibilité d'être indifféremment appliqués sur des profilés disposés verticalement, horizontalement ou d'une manière oblique.

Un autre inconvénient que présentent les colliers de serrage disponibles sur le marché, est qu'ils sont dimensionnés pour être appliqués sur un profilé tubulaire bien défini sans aucune possibilité d'une application sur des profilés ayant des dimensions différentes de celles du profilé pour lequel ils sont réalisés.

Un autre inconvénient de beaucoup des colliers de serrage résulte de leur encombrement extérieur qui rend peu pratique le chariot qui en est équipé.

Un autre inconvénient est dû au fait que les colliers présentent des parties saillantes qui peuvent s'accrocher pendant le déplacement du chariot.

Un autre inconvénient est qu'ils présentent le point de support, d'accrochage ou autres d'une seule pièce et/ou solidaire du collier, ce qui nécessite un autre collier de serrage si son emploi doit être autre que soutenir, accrocher ou retenir.

Le but de la présente invention est de remédier aux inconvénients précités grâce à un collier de serrage à montage et démontage rapides sur les profilés tubulaires.

D'autres buts de l'invention sont de fournir un collier de serrage qui présente les avantages suivants :
Avant l'installation et pendant son déplacement il n'a pas besoin d'être désassemblé mais il maintient tous ses éléments connectés entre eux au moyen d'articulations ou de moyens d'engagements réciproques appropriés ;
Il peut être facilement déplacé en exigeant l'emploi d'une seule main d'un éventuel utilisateur ;
Il comporte un dispositif pour compenser l'usure afin de maintenir l'adhérence nécessaire sur les profilés devant être serrés ;
Il peut être appliqué d'une manière réversible ;
Il peut être appliqué sur des profilés orientés aussi bien verticalement qu'horizontalement ou d'une manière oblique ;
Il peut être appliqué sur des profilés tubulaires ayant des dimensions différentes ;
Il présente un encombrement extérieur réduit ;
Le dispositif de fermeture a des extrémités effilées et se raccordant avec le profil du collier ;
Il présente un siège ou une attache auquel peuvent être appliqués divers accessoires, pouvant être orientés suivant les besoins.

Ces buts ultérieurs, caractéristiques et avantages qui ressortiront de la description qui va suivre d'une forme d'exécution préférée, sont atteints, suivant la présente invention, avec le collier de serrage tel que décrit ci-après.

Sur les dessins :
La figure 1 est une vue en perspective d'un collier de serrage semi-ouvert, avec le dispositif de fermeture en position ouverte.
Les figures 2 et 3 sont des vues de côté du collier de serrage représenté sur la figure 1.
La figure 4 est une vue en plan du collier de serrage représenté sur la figure 1.
La figure 5 est une vue en perspective de la demi-coquille du collier de serrage qui présente un appendice destiné à être utilisé pour l'application d'un porte-accessoires.
Les figures 6 et 8 sont des vues de côté de la demi-coquille représentée sur la figure 5.
La figure 7 est une vue en plan de la demi-coquille représentée sur la figure 5.
La figure 9 est une vue en coupe de la demi-coquille apparaissant sur la figure 5, faite suivant la ligne A-A de la figure 6.

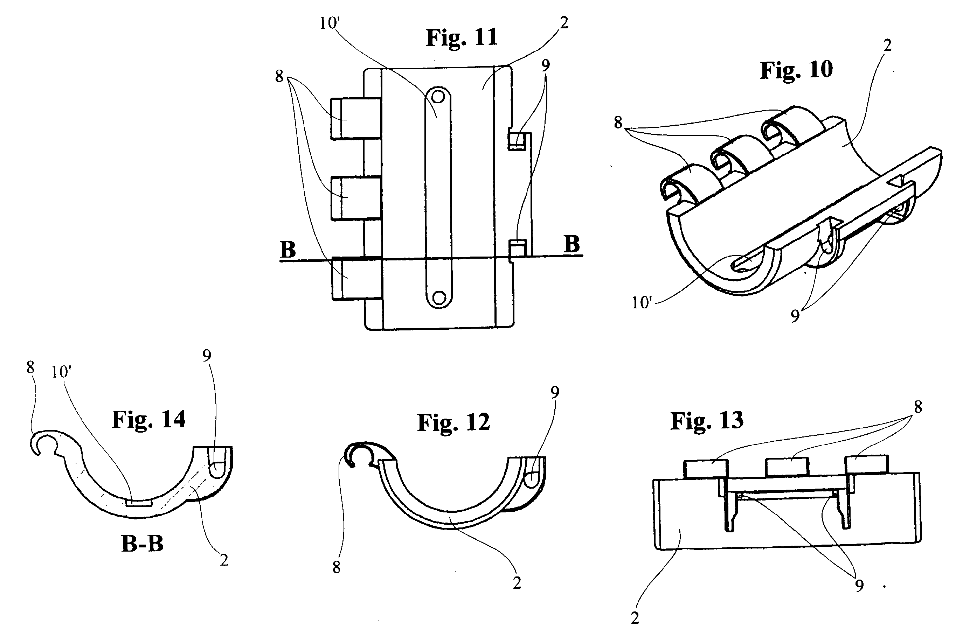

La figure 10 est une vue en perspective de la seconde demi-coquille.
Les figures 11 et 13 sont des vues de côté de la demi-coquille représentée sur la figure 10.
La figure 12 est une vue en plan de la demi-coquille représentée sur la figure 10.
La figure 14 est une vue en coupe de la demi-coquille représentée sur la figure 10, faite suivant la ligne B-B de la figure 11.
La figure 15 est une vue en perspective du levier.
La figure 16 est une vue en plan du levier.
Les figures 17 et 18 sont des vues de côté du levier.
La figure 19 est une vue en perspective du crochet.
La figure 20 est une vue en plan du crochet.
Les figures 21 et 22 sont des vues de côté du crochet.
La figure 23 est une vue en coupe du crochet représenté sur la figure 19, faite suivant la ligne C-C de la figure 21.
La figure 24 est une vue en perspective d'un crochet refermé sur un profilé tubulaire à section circulaire.
La figure 25 est une vue en plan du crochet représenté sur la figure 24.

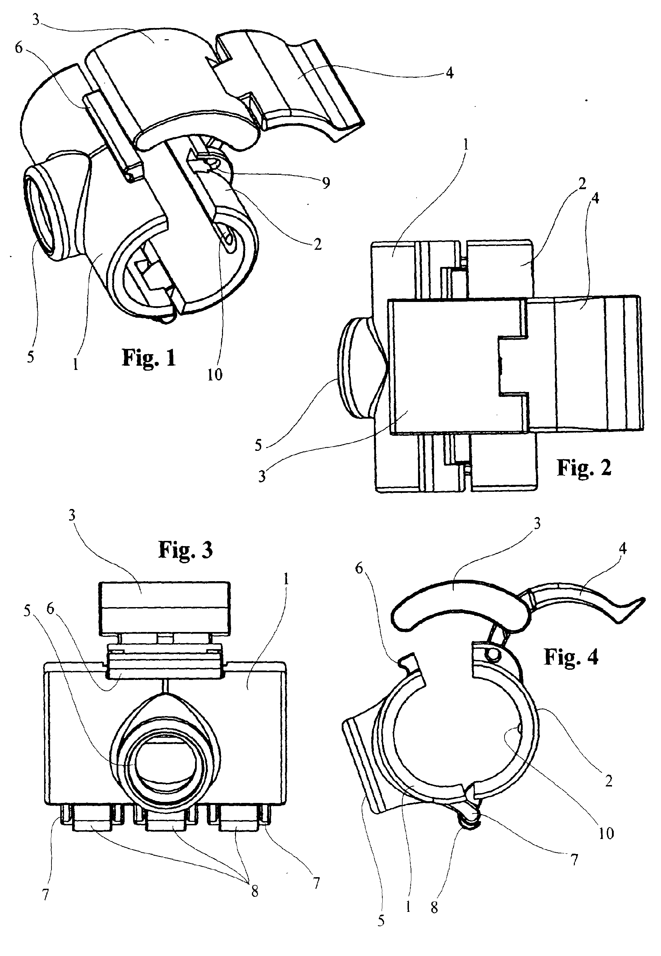

Sur les figures 1,2,3 et 4 est représenté un collier de serrage composé d'une première demi-coquille 1, pourvue d'un siège 5 (ou d'un appendice) pour l'application d'un porte-accessoires, et d'une seconde demi-coquille 2 sur laquelle est articulé un levier 4 relié à un crochet 3. En position de fermeture, le crochet 3 est en prise avec une saillie 6 située le long d'un bord longitudinal de la première demi-coquille 1. Le levier 4 est articulé sur des sièges 9 creusés dans une bordure qui s'étend le long d'un bord longitudinal de la demi-coquille 2. Les deux demi-coquilles 1 et 2 sont articulées entre elles, d'une manière amovible, au moyen du dépassement, avec une légère interférence, le long du bord longitudinal opposé, d'axes et de leurs sièges correspondants solidaires respectivement des deux demi-coquilles. Un élément 10 en matière élastique est appliqué sur la surface interne de la demi-coquille 2.

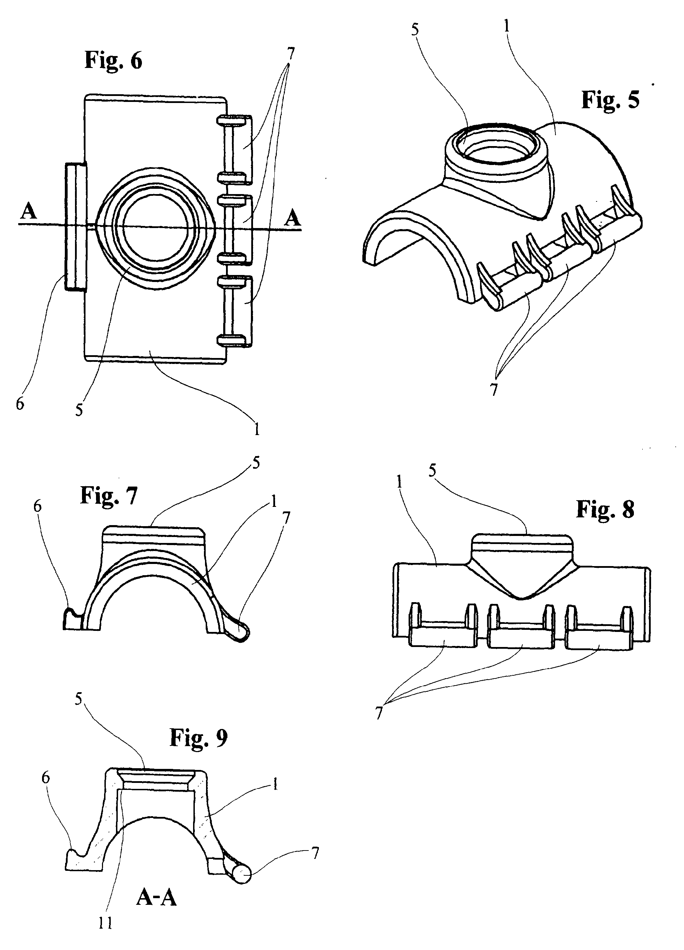

Les figures 5,6,7 et 8 représentent la demi-coquille 1 pourvue du siège (ou appendice) 5 pour l'application d'un porte-accessoires et qui présente, sur un bord longitudinal, une saillie 6 pour l'accrochage du crochet 3. La semi-coquille présente, sur l'autre bord longitudinal, des axes 7 pour l'articulation du type charnière avec les sièges 6 solidaires, quant à eux, de la demi-coquille 2.

La figure 9 montre en coupe comment le siège (ou l'appendice) 5, de configuration circulaire, prévu pour l'application d'un porte-accessoires, permet l'accouplement de ce porte-accessoires par encliquetage en l'accrochant à un épaulement 11, de manière que le porte-accessoires puisse être tourné (par rapport au siège ou' appendice) afin d'être placé dans la position désirée.

Les 10,11,12 et 13 représentent l'autre demi-coquille 2 qui est pourvue, sur un côté, d'une bordure dans laquelle sont creusés des sièges 9 pour l'articulation du levier 4 et qui est pourvue, sur le côté opposé, des sièges 8 pour constituer, en combinaison avec les axes 7, la charnière de liaison avec la demi-coquille 1.

Comme on peut le constater, les sièges 8 sont partiellement ouverts pour permettre, en produisant un léger effort, pour dépasser l'interférence, dans un sens perpendiculaire à l'axe de l'articulation, d'accoupler et de désaccoupler les axes 7 et les sièges 8. On voit également sur la figure 8 l'élément élastique 10 appliqué sur la surface interne de la demi-coquille 2.

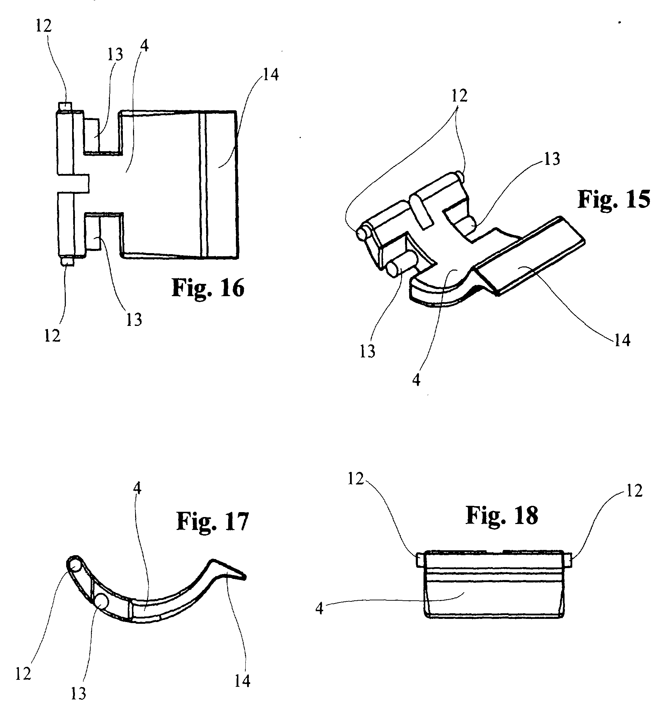

Sur la vue en coupe de la figure 14 on peut voir clairement le siège 10' de l'élément élastique 10. Ce siège 10' pourrait être avantageusement constitué par une rainure à section en queue d'aronde. L'élément élastique 10 peut être appliqué directement, par extrusion, dans le siège 10'.

Les figures 15,16,17 et 18 représentent le levier 4 pourvu d'axes pour l'articulation, du type charnière, dans les sièges 9 de la demi-coquille 2, et pourvu également d'axes 13 pour l'articulation respective avec le crochet de fermeture 3. Le levier 4 est configuré de façon à présenter une partie rehaussée 14 pour pouvoir être manoeuvré facilement. Il convient de noter que le levier 4 a un profil en plan à section allant en rétrécissant à partir de l'axe d'articulation 12 jusqu'à l'extrémité de la partie rehaussée 14.

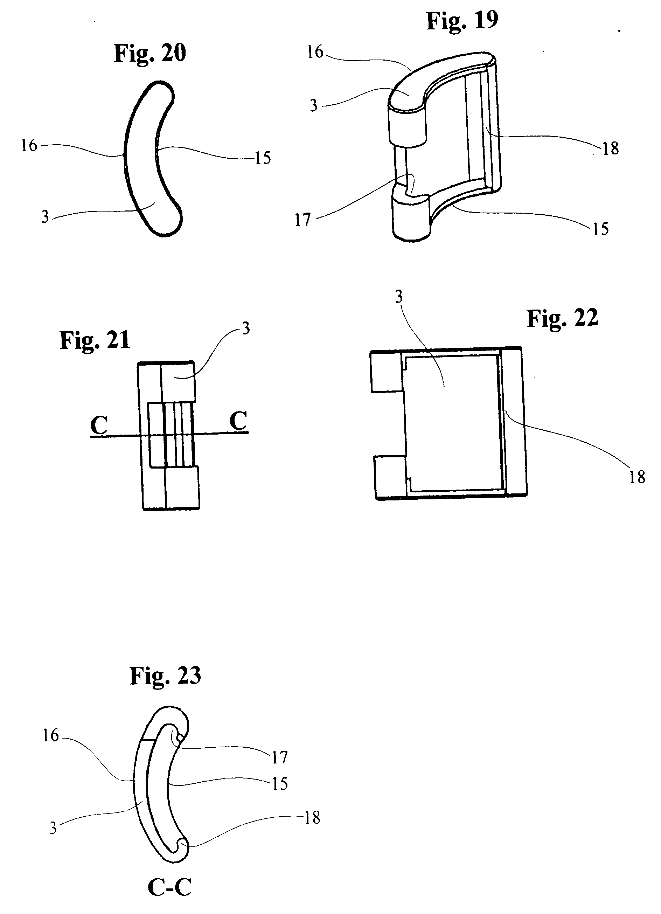

Les figures 19,20,21 et 22 représentent le crochet 3 qui, conjointement avec le levier 4, constitue le dispositif de fermeture. Le crochet 3 suit, avec son profil interne et externe, le contour externe des deux demi-coquilles 1 et 2 afin que le collier de serrage présente un encombrement minimal en position de fermeture. Sur la vue en coupe de la figure 23 on peut voir le siège 17 semi-ouvert qui vient en prise avec les axes 13 du levier 4 et le croc 18 qui s'accroche à la saillie 6 de la demi-coquille 1 au cours de la phase de fermeture.

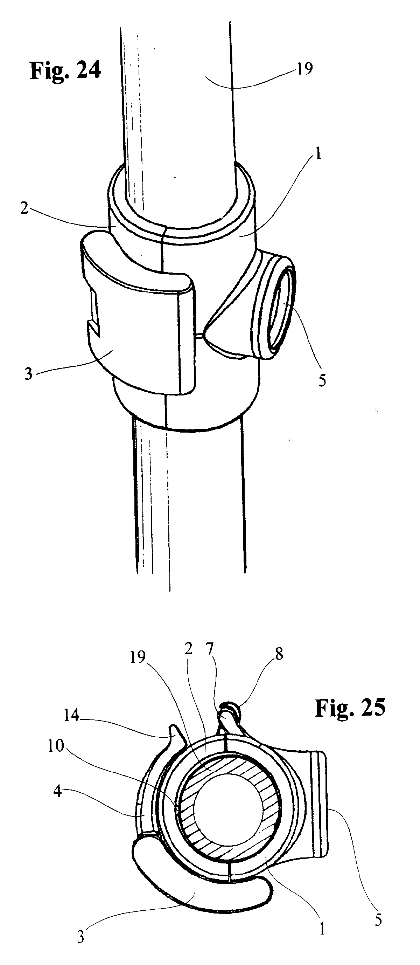

Les figures 24 et 25 représentent le collier de serrage avec le dispositif de fermeture 3 et 4 en position de fermeture, et avec les deux demi-coquilles 1 et 2 serrées sur un profilé tubulaire 19. On peut noter comment l'élément élastique 10, appliqué à l'intérieur de la surface de la demi-coquille 2, prend appui contre le profilé tubulaire 19 et compense les variations de diamètre qui pourraient apparaître avec des profilés tubulaires de dimensions différentes.

Le fonctionnement du collier de serrage résulte d'une façon évidente de ce qui a été décrit et illustré.

Avant d'être installé sur les profilés tubulaires, le collier de serrage est assemblé avec ses divers composants. Si besoin est il est facilement désassemblé par une opération en sens inverse de celle de l'assemblage.

Les liaisons d'articulation sont maintenues pendant l'installation, la désinstallation et également pendant le déplacement du collier de serrage si bien que les composants individuels ne se séparent pas, ce qui permet une utilisation avantageuse et commode. Les deux demi-coquilles 1 et 2, lorsqu'elles sont articulées entre elles par les axes 7 logés dans les sièges 8, prennent, avec leurs profils internes, une configuration complémentaire de celle du profilé tubulaire sur lequel elles peuvent être appliquées.

Pour compléter ce qui a été exposé précédemment, on précisera ce qui suit. La liaison de fermeture, sur les bords longitudinaux opposés à ceux où se trouve l'articulation du type charnière, est due à un dispositif de fermeture qui se compose d'un levier 4 et d'un crochet 3. Le levier 4 est relié, dans la zone médiane, à la partie du crochet 3 que l'on appellera "tête de bielle". La portion du levier 4, qui est articulée sur les sièges 9 de la demi-coquille 2 et qui est reliée, dans sa zone médiane, à la partie du crochet 3 "tête de bielle", assume la fonction d'une manivelle. La bielle 3, configurée, à l'endroit de son pied, en tant que croc, est amenée, pendant la fermeture, à venir en prise avec la saillie d'accrochage 6 de la demi-coquille 1.

La fermeture fonctionnelle est obtenue quand, en faisant pivoter le levier 4, l'axe d'accouplement entre la tête de bielle 3 et la manivelle 4 dépasse l'alignement réalisé entre l'axe de venue en prise du pied de bielle avec la saillie 6 d'accrochage de la demi-coquille 1 et l'axe d'articulation du levier 4. Pour l'ouverture on opère d'une manière inverse. On fait tourner en sens inverse le levier 4 de manière que l'axe d'accouplement entre la tête de bielle 3 et la manivelle 4 passe de l'autre côté de l'alignement entre l'axe de prise du pied de bielle avec la saillie d'accrochage 6 et l'axe d'accouplement relatif à l'articulation du levier. L'ouverture des deux demi-coquilles se produit alors en séparant le pied de bielle de la saillie d'accrochage 6.

Il convient de souligner qu'aucune vis n'est utilisée et qu'il n'est pas nécessaire d'employer un quelconque outil pour le montage et le démontage.

Pendant le déplacement il n'est pas nécessaire de désaccoupler totalement le crochet 3 de la saillie d'accrochage 6 mais il est suffisant de soulever le levier 4 parce que les deux demi-coquilles 1 et 2 relâchent le serrage du profilé tubulaire au point de pouvoir faire coulisser d'une manière suffisamment libre le collier de serrage le long du profilé tubulaire 9.

De cette façon, le déplacement et la remise en position du collier de serrage peuvent être effectués facilement avec une seule main, par un utilisateur éventuel, du fait que le collier de serrage n'est pas désassemblé mais qu'il est seulement desserré en étant retenu par rapport au profilé tubulaire et qu'il maintient connectés entre eux et retenus tous les éléments dont il est composé, par l'intermédiaire des articulations. Les demi-coquilles 1 et 2 peuvent présenter, sur leur profil interne, un ou plusieurs éléments élastiques qui peuvent être avantageusement constitués d'un matériau à adhérence élevée, du type caoutchouc. De cette façon, la prise du collier de serrage sur les profilés tubulaires sur lesquels il est appliqué, est notablement accrue. En outre, ces éléments élastiques compensent une usure éventuelle des demi-coquilles, en permettant également l'accrochage du collier de serrage, avec l'adhérence nécessaire.

Une autre fonction assumée par ces éléments élastiques à souplesse élevée est qu'ils permettent le montage du collier de serrage également sur des profilés tubulaires de dimensions géométriques diverses, en compensant les variations de dimension.

Les éléments élastiques peuvent être retenus par les demi-coquilles d'une manière mécanique, en prévoyant des sièges appropriés, par exemple à section en queue d'aronde, ou bien ils peuvent être extrudés directement sur les demi-coquilles.

Les dimensions géométriques les plus avantageuses des éléments élastiques sont celles qui sont réalisées avec des éléments individuels longitudinaux, parallèles à l'axe du profilé tubulaire et espacés entre eux, ou bien celles réalisées en arc de circonférence suivant le profil interne des demi-coquilles.

La configuration externe des éléments élastiques peut être lisse ou rugueuse ou bien encore en dents de scie.

Le profil de la section transversale des éléments élastiques pourrait accroître les avantages exposés précédemment si cette section venait à être configurée d'une façon triangulaire de manière à appuyer la base sur une demi-coquille et un angle contre la surface du profilé tubulaire.

Dans ce qui précède on a décrit un exemple de collier de serrage comportant deux demi-coquilles. Il est toutefois évident que les caractéristiques particulières de l'invention sont présentes également si les demi-coquilles devaient être en nombre supérieur.

Les profilés auxquels peut être appliqué le collier de serrage suivant la présente invention peuvent présenter des géométries les plus diverses.

## Revendications

1. Collier de serrage à montage et démontage rapides sur des profilés tubulaires, comprenant deux éléments (1,2) qui, accouplés l'un à l'autre, forment une cavité correspondant aux profilés tubulaires auxquels ils doivent être fixés, **caractérisé en ce qu'**il comprend un mécanisme de fermeture à levier (4) et bielle (3) appliqué sur des saillies présentes sur une paire de bords longitudinaux accolés des deux éléments (1,2) du collier.

2. Collier de serrage à montage et démontage rapides suivant la revendication 1 **caractérisé en ce que** les deux éléments du type coquille, constituant le collier de serrage, sont respectivement reliés l'un à l'autre, à l'opposé des bords concernés par la fermeture du type accrochage à bielle-manivelle, par un système d'articulation du type charnière.

3. Collier de serrage à montage et démontage rapides suivant la revendication 1 **caractérisé en ce que** le mécanisme de fermeture (3,4) suit l'allure du profil externe des deux éléments (1,2).

4. Collier de serrage à montage et démontage rapides suivant la revendication 1 **caractérisé en ce que** les bords longitudinaux du mécanisme de fermeture (3,4) se raccordent au profil externe des deux éléments (1,2).

5. Collier de serrage à montage et démontage rapides suivant la revendication 1 **caractérisé en ce que** l'un au moins des deux éléments présente, au-delà de son profil interne, des saillies en matière élastique (10).

6. Collier de serrage à montage et démontage rapides suivant la revendication 5 **caractérisé en ce que** l'élément de matière élastique (10) est configuré géométriquement de manière à être allongé longitudinalement.

7. Collier de serrage à montage et démontage rapides suivant la revendication 5 **caractérisé en ce que** l'élément de matière élastique est configuré géométriquement de manière à se développer principalement sur une section transversale ou sur une partie de celle-ci.

8. Collier de serrage à montage et démontage rapides suivant la revendication 5 **caractérisé en ce que** l'élément de matière élastique (10) est fixé par son insertion dans un siège (10') à section en queue d'aronde.

9. Collier de serrage à montage et démontage rapides suivant la revendication 5 **caractérisé en ce que** l'élément en matière élastique est appliqué au moyen d'une extrusion directe.

10. Collier de serrage à montage et démontage rapides suivant la revendication 5 **caractérisé en ce que** l'élément en matière élastique a une section transversale de profil triangulaire.

11. Collier de serrage à montage et démontage rapides suivant les revendications 5 à 11 **caractérisé en ce que** l'élément en matière élastique est en une matière à coefficient de frottement élevé, du type caoutchouc, pour améliorer la prise du profilé tubulaire.

12. Collier de serrage à montage et démontage rapides suivant les revendications 5 à 11 **caractérisé en ce que** l'élément en matière élastique est en une matière à souplesse élevée pour pouvoir s'adapter à des profilés tubulaires de dimensions diverses.

13. Collier de serrage à montage et démontage rapides suivant la revendication 1 **caractérisé en ce que** l'un au moins des deux éléments (1,2) présente une attache (5), mâle ou femelle, qui permet l'application de porte-accessoires pour le support d'outils ou d'autres instruments, en particulier pour le nettoyage.

14. Collier de serrage à montage et démontage rapides suivant la revendication 13 **caractérisé en ce que** les porte-accessoires peuvent être appliqués facilement et d'une façon amovible pour pouvoir en appliquer d'autres ayant des fonctions différentes.

15. Collier de serrage à montage et démontage rapides suivant la revendication 13 **caractérisé en ce que** l'attache présente une symétrie suivant au moins les axes principaux, afin de pouvoir mettre en position les portes-accessoires dans le sens vertical ou dans le sens horizontal.

16. Collier de serrage à montage et démontage rapides suivant la revendication 13 **caractérisé en ce que** l'attache (5) est circulaire et elle permet l'application de porte-accessoires qui peuvent être facilement tournés autour de cette attache (5).

17. Collier de serrage à montage et démontage rapides suivant la revendication 1 **caractérisé en ce que** les sièges (8) de l'articulation du type charnière, disposés sur un bord longitudinal d'un élément (2), et les saillies (7), assumant la fonction d'axes, disposés sur le bord longitudinal de l'autre élément (1) et qui s'engagent dans les sièges (8) de l'articulation du type charnière, font partie des éléments respectifs (1,2).

18. Collier de serrage à montage et démontage rapides suivant la revendication 1 **caractérisé en ce que**, pendant le déplacement, le pied de bielle (3) demeure en prise sur la saillie correspondante (6) de l'élément opposé (1).
